## Europäisches Patentamt

(19) **European Patent Office**

**Office européen des brevets**

(11) Publication number: **0 165 621**
**B1**

(12) **EUROPEAN PATENT SPECIFICATION**

(45) Date of publication of patent specification: **31.01.90**

(51) Int. Cl.⁵: **B 60 R 22/18**

(21) Application number: **85108628.0**

(22) Date of filing: **19.05.82**

(60) Publication number of the earlier application in accordance with Art. 76 EPC: **0 067 965**

(54) Locking clamp for fastening devices.

(30) Priority: **19.06.81 DE 3124190**

(43) Date of publication of application:
**27.12.85 Bulletin 85/52**

(45) Publication of the grant of the patent:
**31.01.90 Bulletin 90/05**

(84) Designated Contracting States:
**FR GB IT SE**

(56) References cited:
**FR-A-2 265 002**
**GB-A-2 020 963**
**US-A-3 456 896**
**US-A-4 149 737**
**US-A-4 167 277**

(73) Proprietor: **N.V. KLIPPAN S.A.**
**Research Park Grauwmeer 1**
**B-3030 Heverlee-Leuven (BE)**

(72) Inventor: **Weman, Per Olof**
**Hertogstraat 143 bus 65**
**B-3030 Heverlee (BE)**

(74) Representative: **Weber, Dieter, Dr. et al**
**Dr. Dieter Weber und Dipl.-Phys. Klaus Seiffert**
**Patentanwälte Gustav-Freytag-Strasse 25**
**Postfach 6145**
**D-6200 Wiesbaden 1 (DE)**

Courier Press, Leamington Spa, England.

## Description

The invention concerns a fastening device for cables, tapes, straps etc. on a preferably thin wall in which at least one opening for receiving a support is provided, and optionally with a reinforcing plate arranged on the side of the wall remote of the strap, with an aperture to be aligned with the wall opening. More particular, the present invention relates to a fastening device for a seat belt retractor, comprising hooks at the housing of the seat belt retractor to be engaged with openings in a thin wall and with corresponding apertures in an optional reinforcing plate arranged on the side of the wall remote from the seat belt, and means for preventing lateral displacement of said hooks relatively to said openings.

In order to suspend a heavy weight on a wall, particularly a belt strap, which is highly stressed at the time of an accident, at a point in the motor vehicle on a wall, nuts or threaded plates are welded on the wall, e.g. on the chassis of the vehicle or on the bottom. The belt strap anchor is then screwed into these threaded holes, but special tools, like manual or power screw drivers of various sizes must be used in the assembly of the vehicle to anchor the screws firmly in the threaded holes. Apart from the necessary use of special tools, the fastening is time consuming, because the tools are sometimes difficult to use because of the special site of the fastening. In addition, the manufacture of nuts or threaded plates, etc., to be welded-on for the preparation of a fastening site is time- and cost-intensive. Many welded-on fastening sites have furthermore the disadvantages that they project to the outside and may represent hazards at the time of an accident, unless they are covered with protective caps.

This invention is particularly directed to applications in which seat belt retractors are secured on the vehicle. According to the invention, means are to be provided to fix this fastening part in a suitable manner on the vehicle. As a fastening site is frequently used a thin wall in which an opening is provided which is to be engaged by locking parts of the mounting.

From US 4,149,737 there is known a fastening device for seat belt retractors on preferably thin walls in a motor vehicle. Hooked parts extend on the housing of the retractor toward the wall and are introduced into openings in the wall and recess behind the openings in a reinforcing plate and locked in place by means of a self-tapping screw and a flanged structure provided at the lower end of the retractor.

In other known types of fastening, notches, grooves or slots are provided which are applied on corresponding edges in the vehicle wall, which can also be reinforced, if necessary. On the side opposite these notches must be provided a locking clamp, e.g. in the form of a steel spring, which ensures its fastening in cooperation with a shoulder on the housing of the retractor. The manufacture and assembly of such a steel spring presents some difficulties, since it must have considerable bending resistance. Other locking clamps consist of screws or rivets whose assembly likewise presents some difficulties, particularly since it is not always possible to get to the desired point in the vehicle with the tool.

In view of the state of art as discussed above it is the object of the present invention to provide a fastening device of the above mentioned type which permits rapid assembly without special tools and which is simple to manufacture.

## Summary of the Invention

In accordance with this invention, the fastening device as mentioned at the beginning of the description is characterized in that said housing comprises a recess at a location spaced from said hooks and in that a locking clamp is provided lockingly engaging said recess and bearing against a wall substantially perpendicular to said thin wall, thereby preventing lateral displacement of said housing and hooks respectively.

## Brief Description of the Drawings

Fig. 1 shows an embodiment of a fastening device with a locking clamp for fastening a retractor on a thin vehicle wall.

Fig. 2 shows a broken-off partial view, seen from the right to the left in Fig. 1 (bottom front left).

Fig. 3 shows a perspective view of the housing of a retractor and in a distance next to it another embodiment of a locking clamp.

## Description of the Preferred Embodiments

In the embodiments, which will be described below more fully on the basis of the drawings, a free space is provided between the inclined surface and the snap tongue, which permits the snap tongue to move towards the inclined surface during the assembly, which means merely that the locking clamp is placed into the remaining opening or recess. In this movement the correspondingly applied snap tongue can snap back and permit the passage of the locking clamp through the desired opening, while after it has been put through the opening down to the desired depth, the snap tongue snaps back and prevents a sliding movement of the locking clamp in the opposite direction.

In another expedient embodiment of the invention, the inclined surface has a nose at one end, preferably at the end opposite the base of the snap tongue. Beyond the above mentioned advantages, the nose offers the possibility that the respective wall into which the locking clamp was pushed, comes to bear on a sort of shoulder. When the snap tongue then snaps back in the desired manner into its position before it was inserted and before it bore on the shoulder, the position of the wall and/or reinforcing plate, on the one hand and of the locking clamp, on the other hand, is secured. But even in another embodiment without the nose, the inclined surface can be applied in such an angle that the wall or plate strikes against the inclined surface like a ramp, because the locking clamp is so wide or thick toward the side opposite the base of the snap tongue that the desired wall is fixed by clamping and friction.

If the locking clamp according to the invention is fixed, e.g. over hooks on one wall for fastening a seat belt retractor, on a wall secured e.g. in an angle of 90 degrees on the first mentioned wall, this insures that the retractor cannot be displaced laterally. In this way, rivets, steel wire springs and other cumbersome locking methods can be eliminated and be replaced by the simple locking clamp according to the invention.

The thin walls referred to above have a thickness of up to 2 cm. This may be a wall of any shape of sheet metal, wood, plastic etc. so that a reinforcing plate is necessary in some cases. This reinforcing plate is so attached on the thin wall that the opening of the wall is aligned with the recess of the reinforcing plate, whose thickness can be selected as desired, preferably 5 mm or 8 mm.

The above mentioned snap tongue serves as a lock of the clamp to prevent it from falling out, even in long-lasting vibrations. The initial stress of the snap tongue is so adjusted that the clamping engagement and the frictional engagement are maintained. In the assembly, the snap tongue is pressed with the fingers onto the inclined surface, or this is done with a light blow with the fist or with a hammer. When the wall bears on the nose after the locking clamp has been inserted, the snap tongue can snap upward away from the inclined surface, due to its spring force, because the length of the snap tongue is adapted to the corresponding installation conditions. In any case the locking clamp according to the invention prevents that even long-lasting vibrations can force the clamp to fall out from the opening or recess respectively.

The invention can also be so designed that the reinforcing plate is made of sheet metal and the locking clamp of plastic. The tolerances of the clamp can be corrected with advantage without jeopardizing the reliable fastening.

The easy assembly, the economical and simple manufacture and the reliable and safe operation of the subject of the invention is apparent from the foregoing.

According to another embodiment, not shown here, the tongue mounting can also have a U-cross section, and the clamp can extend into the inner space formed by the U. The advantage here is the possibility of making a small clamp with less plastic material. Besides, the outside dimension of the support is reduced, which has the advantage of fastening even in very narrow door jambs.

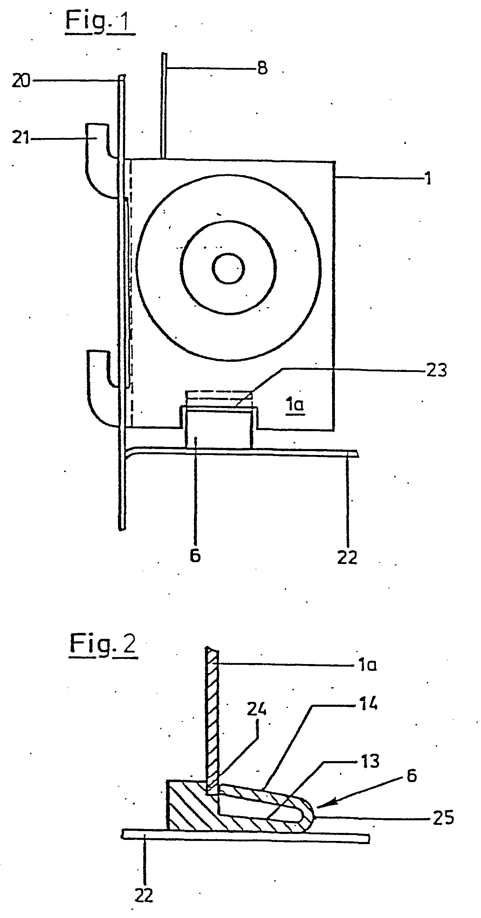

Figs. 1 to 3 only show housing 31 of the retractor, because the other parts are not essential for mounting purposes. Fig. 1 also shows belt strap 8 for the orientation purposes.

Housing 31 of the retractor is held over hooks 21 in openings (not shown) in a thin wall 20, while lateral displacement is prevented by locking clamp 6, which is secured on wall 22 arranged transverse to wall 20. In broken-off front wall 1a shown in Fig. 2 is a recess 23 the size of which is adapted to the dimensions of locking clamp 6. The latter is secured according to the representation in Fig. 1 at a suitable point on wall 22 to be introduced into recess 23. Nose 24 is provided on clamp 6 opposite to snap tongue 14 and snap tongue 14 extends from base 25. This introduction can be explained best on the basis Fig. 2: If wall 1a of housing is to the right of clamp 6 (or the latter to the left of wall 1a), snap tongue 14 can bent down to inclined surface 13 by pushing recess 23 into clamp 6 from the right to the left in Fig. 2, so that, when wall part 1a moves further to the left in Fig. 2 relative to clamp 6, wall part 1a comes finally to bear on nose 24. The shoulder thus formed prevents any further movement of wall part 1a to the left in Fig. 2 relative to clamp 6. In this stage, snap tongue 14 snaps back into its original position, so that the state of Fig. 2 has been reached.

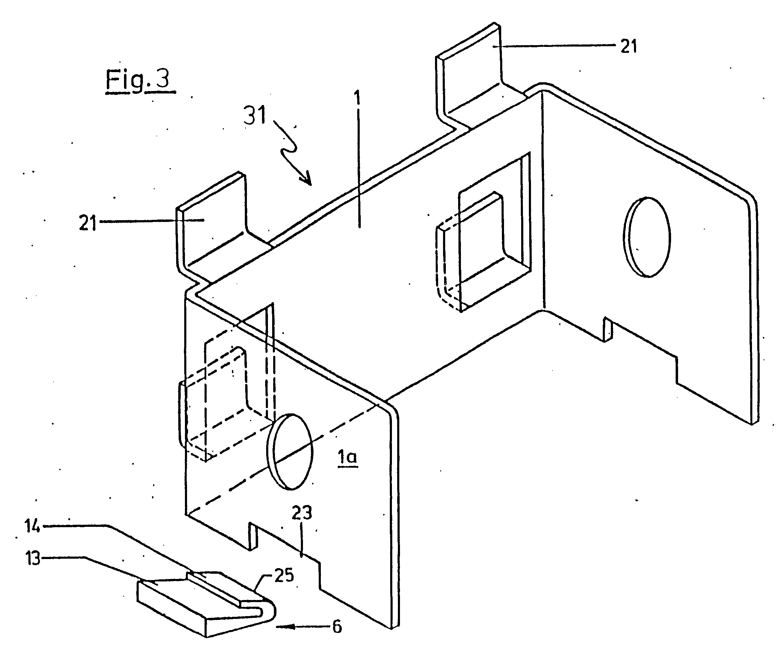

The same operation also takes place in a locking clamp 6, as shown in Fig. 3, though nose 24 is not provided. If wall part 1a is moved in the embodiment of Fig. 3 relative to clamp 6 away from the side of base 25 of snap tongue 14, recess 23 arrives in the higher region of inclined surface 13, after it has passed snap tongue 14, after the latter has snapped back into its original position, and thus comes into such frictional engagement that it is clamped and also locked.

## Claims

1. Fastening device for a seat belt retractor, comprising hooks (21) at the housing (31) of the seat belt retractor to be engaged with openings in a thin wall (20) of a motor vehicle and with corresponding apertures in an optional reinforcing plate arranged on a side of the wall (20) remote from the seat belt (8), and means (6, 23) for preventing lateral displacement of said hooks (21) relatively to said openings, characterized in that said housing (31) comprises a recess (23) at a location spaced from said hooks (21) and in that a locking clamp (6) is provided lockingly engaging said recess (23) and bearing against a wall (22) substantially perpendicular to said thin wall (20), thereby preventing lateral displacement of said housing (31) and hooks (21) respectively.

2. Fastening device according to claim 1, on which a nose (24) is provided on locking clamp (6) at one end and is adapted to engage with wall portion (1a) adjacent recess (23).

3. Fastening device according to claim 1 or 2, wherein an inclined surface (13) and a snap tongue (14) frictionally engage wall portion (1a) adjacent recess (23).

## Patentansprüche

1. Befestigungsvorrichtung für einen Sicherheitsgurtaufroller, mit Haken (21) an dem Gehäuse (31) des Sicherheitsgurtaufrollers, welche mit Öffnungen in einer dünnen Wand (20) eines Kraftfahrzeuges und mit entsprechenden Öffnungen in einer wahlweise vorhandenen Verstärkungsplatte in Eingriff bringbar sind, welche auf einer Seite der Wand (20), die von dem Gurt (8) abgelegen ist, angeordnet ist, und mit Mitteln (6, 23) zum Verhindern einer seitlichen Verschiebung der Haken (21) relativ zu den Öffnungen, dadurch gekennzeichnet, daß das Gehäuse (31) eine Aussparung (23) an einer Stelle vorsieht, die von den Haken (21) beabstandet ist und daß eine Verriegelungsklammer (6) vorgesehen ist, welche in Sperreingriff mit der Aussparung (23) steht und sich gegen eine Wand (22) abstützt, welche im wesentlichen senkrecht zu der dünnen Wand (20) verläuft, wodurch die seitliche Verschiebung des Gehäuses (31) bzw. der Haken (21) verhindert wird.

2. Befestigungsvorrichtung nach Anspruch 1, bei welcher ein Vorsprung an einem Ende einer Verriegelungsklammer (6) vorgesehen ist und so ausgelegt ist, daß er mit einem Wandteil (1a) in Eingriff tritt, der an die Aussparung (23) anschließt.

3. Befestigungsvorrichtung nach Anspruch 1 oder 2, wobei eine geneigte Fläche (13) und eine Schnappzunge (14) in Reibeingriff mit dem Wandabschnitt (1a), der an die Aussparung (23) anschließt, tritt.

**Revendications**

1. Dispositif de fixation pour un enrouleur de ceinture de sécurité comprenant des crochets (21) sur un boîtier (31) de l'enrouleur de ceinture de sécurité prévu pour coopérer avec des ouvertures ménagées dans une paroi de faible épaisseur (20) d'un véhicule à moteur et avec des ouvertures correspondantes dans une plaque de renforcement optionnelle disposée sur un côté de la paroi (20) en éloignement par rapport à la ceinture (8), et des moyens (6, 23) pour empêcher le déplacement latéral desdits crochets (21) par rapport auxdites ouvertures, caractérisé en ce que ledit boîtier (31) comporte une découpe (23) à un emplacement espacé par rapport auxdits crochets (21) et en ce qu'une bride de blocage (6) est prévue pour coopérer en verrouillage avec ladite découpe (23) et venir coopérer en appui contre une paroi (22) sensiblement perpendiculaire à ladite paroi de faible épaisseur (20) de façon à empêcher le déplacement latéral dudit boîtier (31) et des crochets (21) respectivement.

2. Dispositif de fixation selon la revendication 1 sur lequel un talon (24) est prévu sur la bride de blocage (6) à une de ses extrémités et est adapté à coopérer avec la paroi d'extrémité (1a) adjacente à la découpe (23).

3. Dispositif de fixation selon la revendication 1 ou la revendication 2 dans lequel une surface inclinée (13) et une languette élastique (14) coopèrent par frottements avec la partie de paroi (1a) voisine de la découpe (23).

Fig.1

20

21

8

1

23

1a

6

22

Fig.2

1a

24

14

13

6

25

22

1

Fig.3